# EUROPÄISCHE PATENTSCHRIFT

(11) **EP 1 508 460 B1**
(45) Veröffentlichungstag und Bekanntmachung des Hinweises auf die Patenterteilung: **16.01.2008**
(21) Anmeldenummer: 04103583.3
(22) Anmeldetag: 27.07.2004
(51) Int. Cl.: B60G 17/04

(54) **Hydropneumatische Federungseinrichtung**
Hydropneumatic suspension
Suspension hydrpneumatique

(30) Priorität: 16.08.2003 DE 10337600
(43) Veröffentlichungstag der Anmeldung: 23.02.2005
(73) Patentinhaber: DEERE & COMPANY, Moline, Illinois 61265-8098 (US)
(72) Erfinder: Bauer, Wolfgang, 67098 Bad Dürkheim (DE); Schwegler, Heinz, 68809 Neulussheim (DE)
(74) Vertreter: Holst, Sönke

(56) Entgegenhaltungen:
- EP-A- 1 188 587
- DE-A- 4 118 822
- DE-A- 4 120 758
- DE-A- 19 748 224

## Beschreibung

Die Erfindung betrifft eine hydropneumatische Federungseinrichtung mit wenigstens einem hydraulischen Federungszylinder, dessen Zylinderraum und Ringraum jeweils mit wenigstens einem Druckspeicher in Verbindung stehen und mittels Ventilanordnungen wahlweise mit einer Druckquelle und einem Tank verbindbar sind.

Die Federungseinrichtung soll bevorzugt bei gefederten Radaufhängungen von Fahrzeugen, insbesondere von landwirtschaftliche oder industriellen Fahrzeugen, angewendet werden. Bei der Radaufhängung kann es sich um eine Einzelradaufhängung oder um die gefederte Aufhängung einer Fahrzeugachse handeln. Der wenigstens eine Federungszylinder wird zwischen Fahrzeugaufbau und Rad bzw. Fahrzeugachse angeordnet.

Die Auslegung einer hydropneumatischen Federung ist insbesondere bei landwirtschaftlichen oder industriellen Arbeitsmaschinen, wie beispielsweise Traktoren, eine besondere Herausforderung, weil hier extreme Achslastvariationen möglich sind. Die Achslastbandbreite übersteigt meist das bei Membranspeichern mögliche Druckverhältnis. Um den Arbeitsbereich der Druckspeicher einhalten zu können, wird daher das System vorgespannt. Diese Vorspannung wirkt wie eine zusätzliche Achslast, wodurch das Verhältnis von minimaler zu maximaler Achslast verringert werden kann.

Die Vorspannung des Systems erfolgt selten über eine mechanische Vorspannung, bei der dann auch ein einfach wirkender Zylinder eingesetzt werden kann. Üblicherweise kommt ein doppelt wirkender Hydraulikzylinder zum Einsatz, bei dem die Ringraumseite über einen Druckspeicher mit einem bestimmten Druck vorgespannt wird.

Der auf der Ringraumseite eingestellte Druck kann entweder dem maximalen Systemdruck entsprechen (DE-A-43 08 460) oder der Druck wird über einen Druckregler auf einen bestimmten vorgewählten Wert eingestellt (DE-C-42 42 448). Beiden Methoden ist, wie jedem hydropneumatischen System, zueigen, dass die Federrate gemäß einer gegebenen Funktion im Wesentlichen quadratisch von der Achslast abhängt. Für eine konstante Aufbaueigenfrequenz wäre hingegen eine lineare Abhängigkeit ideal.

Um einer praxisgerechten Abhängigkeit näher zu kommen, wurde daher vorgeschlagen (DE-A-197 19 076 und DE-A-197 19 077) in der Ringraumzuleitung ein hydraulisch betätigtes Druckregelventil vorzusehen, dessen Regelfederkraft sich in Abhängigkeit des Drucks in der Zylinderraumzuleitung einstellt. Damit soll der Druck im Ringraum in Abhängigkeit vom Druck im Zylinderraum des Hydraulikzylinders gesteuert werden, wobei bei niedrigen Belastungen die Zusatzbelastung im Ringraum maximal ist und bei höheren Belastungen stetig bis auf einen Minimalwert verringert wird. Hierdurch soll u. a. der Fahrkomfort verbessert werden.

In DE-A-41 20 758 bzw. DE-4 118 822 A ist eine hydropneumatische Fahrzeugfederung der eingangs genannten Art beschrieben, bei der zur Anpassung an große Achslastspreizungen in der Zuleitung zum Ringraum ein hydraulisch betätigtes Regelventil angeordnet ist, das einerseits dem Druck im Ringraum und andererseits dem Druck des Zylinderraums ausgesetzt ist, so dass der Druck im Ringraum in Abhängigkeit vom Druck im Zylinderraum geregelt wird. Hierdurch soll eine höhere Federsteifigkeit im Bereich kleinerer Achslasten erreichbar sein.

Eine bestimmte Achslast kann durch unterschiedliche Ballastierungszustände am Fahrzeug erzeugt werden. Um beispielsweise das Gewicht eines schweren Pfluges auszugleichen und eine ausreichende Last auf die Vorderachse zu bringen, lassen sich vorn am Traktor Ballastierungsgewichte montieren. Durch diese Ballastierung kann sich eine gleiche Achslast an der Vorderachse ergeben wie bei einem Traktor, der weder mit einem Pflug noch mit Frontgewichten ausgerüstet ist. Bei den aus dem Stand der Technik bekannten Fahrzeugfederungen kann die Federsteifigkeit jedoch nicht auf unterschiedliche Ballastierungszustände und Arbeits- oder Fahrzustände des Fahrzeugs reagieren, d. h. die Federsteifigkeit ist unabhängig von diesen Zuständen und hängt lediglich von der jeweils herrschenden Achslast ab. Dies kann beispielsweise dazu führen, dass ein stark ballastierter Traktor bezüglich der Nickeigenfrequenz zu weich gefedert ist, während der unballastierte Traktor zu hart ist.

Die der Erfindung zugrunde liegende Aufgabe wird darin gesehen, ein hydropneumatische Federungseinrichtung der eingangs genannten Art anzugeben, durch welches die vorgenannten Probleme überwunden werden. Insbesondere soll einer gegebenen, unveränderlichen quadratischen Abhängigkeit der Federrate von der Achslast begegnet werden und die Federrate soll an Ballastierungszustände und Arbeits- oder Fahrzustände des Fahrzeugs anpassbar sein und nicht lediglich von der aktuellen Achslast abhängen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße hydropneumatische Federungseinrichtung enthält wenigstens einen hydraulischen Federungszylinder, insbesondere einen doppelt wirkenden Hydraulikzylinder, dessen Zylinderraum und Ringraum jeweils mit wenigstens einem Druckspeicher in Verbindung stehen. Der Federungszylinder kann beispielsweise zwischen dem Chassis eines Fahrzeugs und dessen Rad bzw. Achse angeordnet sein. Mittels Ventilanordnungen lassen sich der Zylinderraum und der Ringraum unabhängig voneinander mit einer Druckquelle und mit einem Tank verbinden.

Diese Federungseinrichtung ist dadurch gekennzeichnet, dass die dem Ringraum zugeordnete Ventilanordnung wenigstens ein erstes elektrisch ansteuerbares Magnetventil aufweist, welches den Ringraum mit der Druckquelle verbindet, und ein zweites elektrisch ansteuerbares Magnetventil aufweist, welches den Ringraum mit dem Tank verbindet. Des Weiteren ist wenigstens ein Drucksensor vorgesehen ist, dessen Signale zur Ansteuerung des ersten und zweiten Magnetventils herangezogen werden.

Bei dem Drucksensor handelt es sich vorzugsweise um einen Ringraumdrucksensor. Alternativ oder ergänzend hierzu kann auch der Zylinderraumdruck gemessen und zur Steuerung herangezogen werden. Hierfür kann z. B. ein gesonderter Zylinderraumdrucksensor vorgesehen sein. Es ist jedoch auch möglich, ein Umschaltventil vorzusehen, welches wahlweise den Ringraum oder den Zylinderraum an den Drucksensor anschließt.

Die Einstellung des Ringraumdrucks erfolgt über die beiden Magnetventile, welche durch von einer Steuereinheit erzeugte Steuerströme ansteuerbar sind. Der Ringraumdrucksensor meldet den Ringraumdruck als Signal an die Steuereinheit. Diese vergleicht den Ringraumdruck mit vorgebbaren Drucksollwerten und erzeugt entsprechende Steuersignale für die Magnetventile. Ist der Druck im Ringraum kleiner als ein vorgebbarer Solldruck, so wird das erste Magnetventil geöffnet, so dass Flüssigkeit von der Druckquelle zum Ringraum und zu dem zugehörigen Ringraumspeicher fließen kann und der Ringraumdruck ansteigt. Ist der Druck im Ringraum größer als ein vorgebbarer Solldruck, so wird das zweite Magnetventil geöffnet, so dass Flüssigkeit von dem Ringraum und von dem zugehörigen Ringraumspeicher zum Tank abfließen kann und der Ringraumdruck absinkt.

Bei der Einstellung des Steuerstromes für die Magnetventile können neben den Signalen des Ringraumdrucksensors weitere Parameter, wie Ballastierung, Fahrgeschwindigkeit und Einsatzbedingungen, Berücksichtigung finden. Da die Federungseinrichtung in der Regel auch über eine Niveauregelung mit einem Positionsgeber verfügt, ist es auch möglich, die Stärke der über den Positionsgeber detektierten Stöße, welche vom Untergrund auf die Reifen übertragen werden, bei der Steuerung zu berücksichtigen.

Mit dieser Federungseinrichtung lässt sich die ringraumseitige Vorspannung der Achsfederung in weiten Grenzen verändern. Insbesondere lässt sich der Ringraumdruck und damit die Federungscharakteristik innerhalb gegebener physikalischer Grenzen beliebig einstellen, so dass einerseits einer festen quadratischen Abhängigkeit der Federrate von der Achslast begegnet werden und z. B. eine eher lineare Federcharakteristik eingestellt werden kann. Andererseits kann die erfindungsgemäße Federungseinrichtung durch geeignete elektrische Ansteuerung der Magnetventile auf unterschiedliche Ballastierungszustände, Geschwindigkeiten und Einsatzbedingungen des Fahrzeugs reagieren. Die Federungseigenschaften lassen sich somit automatisch und auf optimale Weise individuell an unterschiedliche Fahr- und Arbeitseinsätze anpassen.

Die erfindungsgemäße Federungseinrichtung hat darüber hinaus den besonderen Vorteil, dass sich der Druck im Ringraum innerhalb vorgegebener Grenzen in Schritten oder stufenlos auf einen beliebigen Wert einstellen lässt. Dabei wirken sich Störungen durch Druckschwankungen sowohl auf der Versorgungsseite (veränderter Pumpendruck durch zusätzliche Verbraucher) als auch auf der Ringraumseite (durch Federbewegungen) nur sehr begrenzt aus, da keine Drücke zur unmittelbaren Steuerung der Magnetventile verwendet werden. Vorzugsweise kann bei der Ansteuerung ein Zeitverhalten berücksichtigt werden, so dass beispielsweise schnelle Druckschwankungen im Ringraum über eine Steuerelektronik herausgefiltert werden.

Vorzugsweise ist wenigstens eines der beiden Magnetventile ein einfaches sitzdichtes Magnetventil. Es kann sich beispielsweise um ein elektromagnetisch betätigbares Ein-Aus-Ventil (Schaltventil) handeln, das beim Anlegen eines geeigneten elektrischen Signals öffnet und sonst schließt.

Gemäß einer bevorzugten Ausgestaltung der Erfindung enthält das erste Magnetventil in seiner geschlossenen (abgeschalteten, stromlosen) Stellung eine Rückschlagfunktion, die einen Flüssigkeitszufluss von der Druckquelle zum Ringraum verhindert. Dieses sitzdichte Rückschlagventil sorgt in besonders wirkungsvoller Weise dafür, dass bei abgeschaltetem ersten Magnetventil eine Leckage von der Druckquelle zur Ringraumseite des Hydraulikzylinders unterbleibt. Alternativ oder ergänzend hierzu ist es von Vorteil, dass das zweite Magnetventil in seiner geschlossenen (abgeschalteten, stromlosen) Stellung eine Rückschlagfunktion enthält, die einen Flüssigkeitsabfluss vom Ringraum zum Tank verhindert. Dieses sitzdichte Rückschlagventil sorgt in besonders wirkungsvoller Weise dafür, dass bei abgeschaltetem zweiten Magnetventil eine Leckage von der Ringraumseite des Hydraulikzylinders zum Tank unterbleibt.

Um insbesondere bei geöffnetem ersten Magnetventil einen Flüssigkeitsrückfluss vom Ringraum des Hydraulikzylinders zur Druckquelle zu verhindern, ist es zweckmäßig, ein entsprechendes Rückschlagventil vorzusehen, das in Serie mit dem ersten Magnetventil angeordnet ist. Das Rückschlagventil kann beispielsweise zwischen dem Ringraum des Hydraulikzylinders und dem ersten Magnetventil angeordnet sein.

Insbesondere dann, wenn das erste und/oder das zweite Magnetventil ein Ein-Aus-Ventil (z. B. Poppet-Ventil) ist, wie es beispielsweise als Modell SV08-20 durch die Fa. HydraForce, Lincolnshire, IL, USA angeboten wird, ist es von Vorteil, den Flüssigkeitsdurchfluss durch das Magnetventil zu begrenzen, um einen ruckartigen Druckaufbau bzw. Druckabbau im Ringraum des Hydraulikzylinders und damit ein instabiles Verhalten zu vermeiden. Eine zweckmäßige Weiterbildung der Erfindung sieht zu diesem Zweck die Verwendung einer Blende vor, die in Serie mit dem jeweiligen Magnetventil angeordnet ist. Beispielsweise kann zwischen dem Ringraum und dem ersten Magnetventil eine erste Blende und/oder zwischen dem Ringraum und dem zweiten Magnetventil eine zweite Blende vorgesehen sein. Die Blende kann in das zugehörige Ventil integriert sein. Die Verwendung von Blenden ermöglicht eine kontrollierte Einstellung des Ringraumdruckes und kann auch im Zusammenhang mit einer Load-Sensing-Steuerung von Vorteil sein.

Als Blende wird im folgenden ein Strömungswiderstand angesehen, der auf unterschiedliche Weise ausgebildet sein kann, beispielsweise als lokale Verengungsstelle (Blende) oder als sich über einen längeren Strömungsweg erstreckende Verengung (Drossel).

Gemäß einer weiteren besonders bevorzugten Ausgestaltung der Erfindung wird als erstes Magnetventil und/oder als zweites Magnetventil ein proportional wirksames, sitzdichtes Ventil (Proportionalventil) verwendet, wie es beispielsweise als Modell SP08-20 durch die Fa. HydraForce, Lincolnshire, IL, USA angeboten wird. Durch die Verwendung von Proportionalventilen anstelle von EIN-AUS-Ventilen kann grundsätzlich auf eine den Durchfluss begrenzende Blende verzichtet werden. Allerdings kann eine Blende im Zusammenhang mit einer Load-Sensing-Steuerung dennoch sinnvoll sein.

Vorzugsweise ist das erste Magnetventil ein elektrisch ansteuerbares Wegeventil, insbesondere ein 3/2-Wegeventil, welches in stromloser Stellung seinen ringraumseitigen Anschluss mit seinem tankseitigen Anschluss verbindet (Tankstellung) und im erregten Zustand seinen druckquellenseitigen Anschluss mit dem ringraumseitigen Anschluss verbindet (Druckquellenstellung). Bei dem Wegeventil kann es sich sowohl um ein Schaltventil als auch um ein proportional ansteuerbares Ventil handeln. Bei Verwendung eines Proportionalventils ist eine Blende zur Durchflussbegrenzung nicht erforderlich.

Für konkrete Anwendungsfälle kann es von Vorteil sein, als erstes und/oder zweites Magnetventil ein Proportionaldruckregelventil oder ein Proportionaldruckbegrenzungsventil zu verwenden wie sie beispielsweise als Modell TS98-31 oder TS08-27 durch die Fa. HydraForce, Lincolnshire, IL, USA angeboten werden. Beispielsweise kann zur gesteuerten Druckentlastung (gemäß einer vorgebbaren Zeitkennlinie) auf der Entlastungsseite zum Tank als zweites Magnetventil ein Proportionaldruckbegrenzungsventil und auf der Belastungsseite von der Druckquelle als erstes Magnetventil ein Proportionaldruckregelventil verwendet werden.

Bei Ausfall des Drucksensors könnte das erste Magnetventil vollständig öffnen, so dass der maximale Druck der Druckquelle zum Ringraum und dem zugehörigen Druckspeicher gelangt. Für den normalen Federungsbetrieb muss jedoch insbesondere der Druckspeicher nicht auf den Maximaldruck der Druckquelle ausgelegt sein. Um auch Druckspeicher und andere Hydraulikkomponenten verwenden zu können, die weniger hoch belastbar sind, ist gemäß einer bevorzugten Weiterbildung der Erfindung ein Druckbegrenzungsventil vorgesehen, welches den Ringraum mit dem Tank verbindet und bei einem vorgebbaren Druck den Ringraum zum Tank entlastet. Ein weiterer Vorteil des Druckbegrenzungsventils ist darin zu sehen, dass bei Funktionsstörungen die Federung nicht zu sehr verhärtet, was sich negativ auf die Fahreigenschaften auswirken würde.

Die Druckquelle ist zweckmäßigerweise eine Hydraulikpumpe. Es kann sich beispielsweise um eine Hydraulikpumpe handeln, die bereits für andere Hydraulikabnehmer des Fahrzeugs zur Verfügung steht. Um die Hydraulikpumpe wirtschaftlich einsetzen zu können, wird häufig eine Pumpe mit einer Load-Sensing-Funktion verwendet, bei welcher der geforderte Systemdruck zur Ansteuerung der Pumpe herangezogen wird. Die Hydraulikpumpe fördert dabei nur bei Anforderung Hydraulikflüssigkeit und geht ansonsten in einen leistungsarmen Stand-by-Betrieb über.

Um für die erfindungsgemäße Federungseinrichtung mit Erfolg eine Load-Sensing-Pumpe einsetzen zu können, wird gemäß einer bevorzugten Weiterbildung der Erfindung vorgeschlagen, den Steueranschluss der Load-Sensing-Pumpe über eine Steuerleitung mit dem ringraumseitigen Anschluss des ersten Magnetventils zu verbinden. Wenn der an diesem Anschluss herrschende Druck über eine Blende oder über ein proportional wirksames Magnetventil zum Tank hin abgebaut wird (nicht erregte Stellung des Magnetventils), besteht kein Druckmittelbedarf und die Load-Sensing-Pumpe geht in ihren Stand-by-Betrieb über. Ein Druckabbau aus dem Ringraum des Hydraulikzylinders wird hierbei durch ein Rückschlagventil verhindert. Wird hingegen durch das erste Magnetventil die Verbindung zur Pumpe geöffnet, so steigt der ringraumseitige Druck an. Dieser Druckanstieg wird von der Load-Sensing-Pumpe wahrgenommen, welche ausschwenkt und ihren Ausgangsdruck so einstellt, dass er immer um beispielsweise 30 bar über dem ringraumseitigen Druck liegt.

Sofern das erste Magnetventil keine Verbindung zum Tank herstellt, ist es für einen ordnungsgemäßen Load-Sensing-Betrieb erforderlich, dass der Druck der Druckquelle nicht ständig dem ringraumseitigen Druck entspricht, sondern den Erfordernissen gemäß abgebaut wird. Um hierbei einen Druckmittelabfluss von der Ringraumseite zum Tank zu ermöglichen, ist es von Vorteil, die Steuerleitung über eine dritte Blende oder Drosselstelle mit dem Tank zu verbinden.

Es ist zweckmäßig, neben der Ringraumseite des Hydraulikzylinders auch dessen Zylinderraumseite in das Load-Sensing-System einzubeziehen. Hierbei ist es von Vorteil, ein Wechselventil vorzusehen, dessen erster Zulaufanschluss mit der ringraumseitigen Steuerleitung verbunden ist, dessen zweiter Zulaufanschluss mit einer zylinderraumseitigen Steuerleitung verbunden ist und dessen mittlerer Ablaufanschluss mit dem Steueranschluss der Load-Sensing-Pumpe verbunden ist.

Vorzugsweise sind die Ventile der erfindungsgemäßen Federungseinrichtung in einem gemeinsamen Steuerblock zusammengefasst. In diesem Steuerblock kann auch eine Ventilanordnung zur Niveauregelung, welche den Flüssigkeitszu- und -abfluss auf der Zylinderraumseite steuert, integriert sein.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das hydraulische Schaltschema einer hydropneumatischen Fahrzeugfederung mit einer ersten erfindungsgemäßen Federungseinrichtung und
- Fig. 2: eine zweite erfindungsgemäße Federungseinrichtung, die anstelle der ersten Federungseinrichtung im Zusammenhang mit der hydropneumatischen Fahrzeugfederung verwendbar ist.

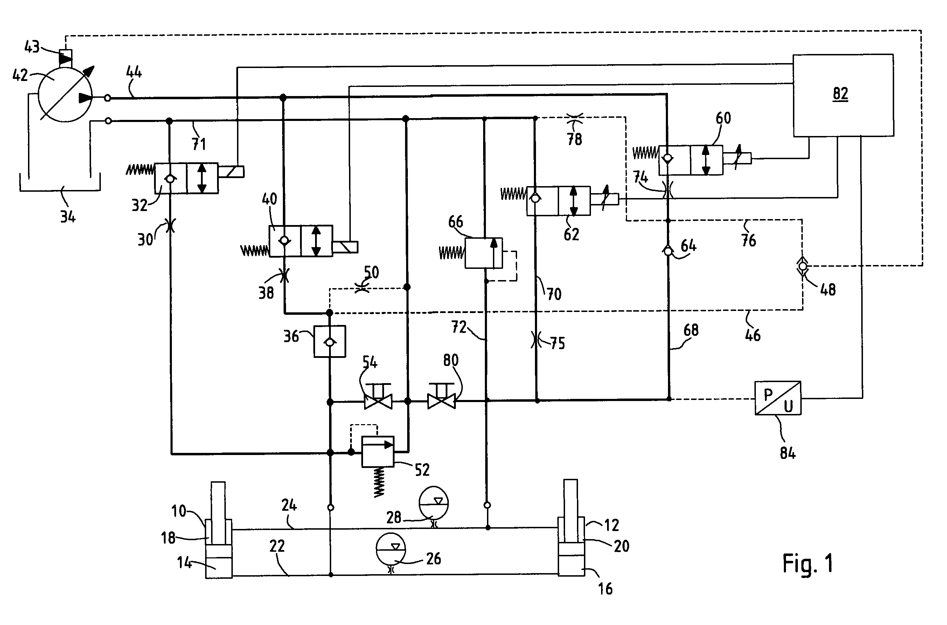

Das in Fig. 1 dargestellte Fahrzeugfederungssystem ist zur Federung einer lenkbaren, pendelnd aufgehängten, nicht näher dargestellten Traktorvorderachse bestimmt. Es enthält zwei Zylinder 10, 12. Die beiden Zylinderräume 14, 16 der Hydraulikzylinder 10, 12 und die beiden Ringräume 18, 20 der beiden Hydraulikzylinder 10, 12 sind jeweils über Hydraulikleitungen 22, 24 miteinander und mit einem zugehörigen Hydrospeicher 26, 28 verbunden.

Die zylinderraumseitige Hydraulikleitung 22 (Zylinderraumseite des Federkreises) ist über eine erste Blende 30 und ein erstes sitzdichtes Schaltventil 32 mit einem Flüssigkeitsbehälter oder Tank 34 verbunden. Das erste Schaltventil 32 lässt sich durch elektrische Signale zwischen einer Durchflussstellung und einer Sperrstellung, in der gewährleistet ist, dass keine Flüssigkeit in unbeabsichtigter Weise aus der Zylinderraumseite des Federkreises zum Tank 34 hin entweichen kann, umschalten. Die zylinderraumseitige Hydraulikleitung 22 ist des Weiteren über ein Rückschlagventil 36, eine zweite Blende 38 und ein zweites sitzdichtes Schaltventil 40 mit einer Druckquelle, bei der es sich um eine regelbare Load-Sensing-Pumpe 42 handelt, verbunden. Das zweite Schaltventil 40 lässt sich durch elektrische Signale zwischen einer Durchflussstellung und einer Sperrstellung, in der gewährleistet ist, dass keine Flüssigkeit in unbeabsichtigter Weise von der Hydraulikpumpe 42 in den Federkreis gelangt, umschalten. Das Rückschlagventil 36 sperrt den Flüssigkeitsstrom in entgegengesetzter Weise wie das zweite Schaltventil 40, um eine Leckage zu unterbinden, wenn der Druck in der Zylinderraumseite des Federkreises größer ist als der Druck der Versorgungsleitung 44.

Diese Ventilanordnung dient der Niveauregelung. Zur Verringerung der Niveaulage wird das erste Schaltventil 32 bestromt, sein Schieber schaltet in die Position "geöffnet" und Hydraulikflüssigkeit strömt aus dem zylinderraumseitigen Hydraulikleitung 22 kontrolliert über die erste Blende 30 zum Tank 34. Um die Achse hoch zu regeln wird das zweite Schaltventil 40 geöffnet, die Flüssigkeit strömt zunächst von der Versorgungsleitung 44 über die zweite Blende 38 in eine Load-Sensing-Leitung 46 und meldet über ein Wechselventil 48 den Druckmittelbedarf an den Steueranschluss 43 der Hydraulikpumpe 42. Diese regelt den Druck solange hoch, bis das Rückschlagventil 36 öffnet und Flüssigkeit in die zylinderraumseitige Hydraulikleitung 22 strömt. Über die zweite Blende 38 wird einerseits der Volumenstrom begrenzt, andererseits auch ein Druckabfall erzeugt, so dass an das Load-Sensing-System immer der auf der Zylinderraumseite herrschende Druck gemeldet wird. Dadurch schwenkt die Pumpe 42 nicht voll aus, sondern stellt immer einen Druck bereit, der z. B. 30 bar über dem Zylinderraumdruck liegt. Parallel dazu fließt bei geöffnetem zweiten Schaltventil 40 auch immer ein Volumenstrom über eine dritte Blende 50 zurück zum Tank 34. Dieser zusätzliche, durch die dritte Blende 50 bereitgestellte Querschnitt wird benötigt, um bei geschlossenem zweiten Schaltventil 40 den Load-Sensing-Druck zum Tank 34 hin zu entlasten.

Es sei betont, dass anstelle des ersten Schaltventils 32 und der ersten Blende 30 bzw. des zweiten Schaltventils 40 und der zweiten Blende 38 auch jeweils ein proportional angesteuertes, sitzdichtes 2/2-Wege-Ventil verwendet werden kann, welches sich stromgesteuert um ein gezieltes Maß öffnen lässt.

Die Zylinderraumseite des Federkreises, nämlich die Hydraulikleitung 22 ist über ein Druckbegrenzungsventil 52 auf einen bestimmten Maximaldruck, der üblicherweise von den Speichern bestimmt ist, abgesichert. Ein Ablassventil 54 wird im Servicefall dazu benutzt, die Zylinderraumseite vom Druck zu entlasten.

Die Einstellung des Ringraumdruckes erfolgt über eine erfindungsgemäße Federungseinrichtung. Diese besteht gemäß Fig. 1 im Wesentlichen aus einem elektrisch einstellbaren sitzdichten ersten Magnetventil 60, einem elektrisch einstellbaren sitzdichten zweiten Magnetventil 62, einem Rückschlagventil 64 und einem Druckbegrenzungsventil 66.

Das erste Magnetventil 60 und das Rückschlagventil 64 sind in einem ersten Zweig 68 in Serie angeordnet und verbinden die zur Pumpe 42 führende Versorgungsleitung 44 mit der ringraumseitigen Hydraulikleitung 24. Dabei verhindert das Rückschlagventil 64 eine Flüssigkeitsrückstrom vom Ringraum zur Pumpe 42. Das zweite Magnetventil 62 ist in einem zweiten Zweig 70 angeordnet und verbindet die ringraumseitige Hydraulikleitung 24 mit einer zum Tank 34 führenden Tankleitung 71. Parallel zum zweiten Zweig 70 ist das Druckbegrenzungsventil 66 in einem dritten Zweig 72 angeordnet und verbindet ebenfalls die ringraumseitige Hydraulikleitung 24 mit dem Tank 34. Das Druckbegrenzungsventil 66 verhindert, dass der Druck in den Ringräumen 18, 20 und im Ringraumdruckspeicher 28 über einen vorgebbaren Druck ansteigt.

Die beiden Magnetventile 60, 62 sind zwischen einer geschlossenen und einer offenen Stellung umschaltbar. In das erste Magnetventil 60 ist eine Rückschlagfunktion integriert, die bei geschlossener Ventilstellung einen Flüssigkeitszustrom von der Pumpe 42 zur ringraumseitigen Hydraulikleitung 22 verhindert, so dass keine oder nur eine vernachlässigbar geringe Leckage von der Druckquelle zur Ringraumseite gegeben ist. In das zweite Magnetventil 62 ist ebenfalls eine Rückschlagfunktion integriert, die bei geschlossener Ventilstellung einen Flüssigkeitsabfluss von der ringraumseitigen Hydraulikleitung 22 zum Tank 34 verhindert, so dass keine oder nur eine vernachlässigbar geringe Leckage von der Ringraumseite zum Tank gegeben ist.

Um bei geöffneter Stellung der Magnetventile 60, 62 den Flüssigkeitsstrom zu begrenzen, ist im ersten Zweig 68 eine erste Blende 74 und im zweiten Zweig 70 eine zweite Blende 75 angeordnet.

Zwischen der ersten Blende 74 und dem Rückschlagventil 64 zweigt eine Load-Sensing-Leitung 76 ab, welche mit dem Wechselventil 48 verbunden ist. Das Wechselventil 48 leitet den höheren der Drücke der beiden Load-Sensing-Leitungen 46 und 76 an die Pumpe 42 weiter.

Über eine dritte Blende 78 kann der Druck in der Load-Sensing-Leitung 76 zum Tank 34 hin abgebaut werden, ohne dass Flüssigkeit aus der ringraumseitigen Hydraulikleitung 24 abfließt. Wenn das erste Magnetventil 60 geschlossen ist, steht an der Load-Sensing-Leitung der Tankdruck an. Wird das erste Magnetventil 60 geöffnet, so steigt der Druck in der Load-Sensing-Leitung 76 an. Dieser Druckanstieg wird von der Load-Sensing-Pumpe wahrgenommen, welche ausschwenkt und ihren Ausgangsdruck so einstellt, dass er immer um beispielsweise 30 bar über dem ringraumseitigen Druck liegt. Damit sorgt auch hier die Entnahme des Load-Sensing-Druckes an der Ringraumseite des ersten Magnetventils 60 dafür, dass die Pumpe 42 nur auf einen Druck von 30 bar über dem Ringraumdruck ausgeschwenkt wird. Ein Ablassventil 80 wird im Servicefall dazu benutzt, die Ringraumseite vom Druck zu entlasten.

Die beiden Schaltventil 32, 40 und die beiden Magnetventile 60, 62 werden durch eine elektrische Steuereinheit 82 angesteuert. Die Steuereinheit 82 erhält Signale von einem nicht gezeigten Positionsgeber, die für die Niveauregelung mittels der Schaltventile 32, 40 herangezogen werden. Für die Einstellung des ringraumseitigen Drucks steuert die Steuereinheit 82 die beiden Magnetventile 60, 62 an. Die Magnetventile 60, 62 sind in stromloser Stellung geschlossen und in bestromter Stellung geöffnet.

Die Steuereinheit 82 enthält Signale von einem Drucksensor 84, der an die ringraumseitige Hydraulikleitung 24 angeschlossen ist und den Ringraumdruck erfasst. Sinkt der gemessene Ringraumdruck unter einen vorgebbaren Wert ab, so wird das erste Magnetventil 60 geöffnet, so dass eine Druckerhöhung im Ringraum erfolgt. Liegt der Ringraumdruck über dem vorgebbaren Wert, so wird das zweite Magnetventil 62 geöffnet und der Ringraumdruck kann sich zum Tank 34 abbauen.

Der vorgebbare Wert für den Ringraumdruck kann durch eine Bedienungsperson entsprechend der vorliegenden Ballastierung des Fahrzeugs vorgegeben werden. Dieser Wert wird vorzugsweise durch Parameter modifiziert. Zu diesem Zweck wertet die Steuereinheit 82 auch Messwerte eines nicht gezeigten Fahrzeuggeschwindigkeitssensors und eines Zugkraftsensors aus. Die Federsteifigkeit lässt sich somit automatisch in Abhängigkeit der Fahrzeuggeschwindigkeit und/oder davon einstellen, ob ein Gerät an das Fahrzeug angehängt oder montiert ist, was aus dem Zugkraftsensorsignal geschlossen werden kann. Die Steuereinheit 82 kann, wenn dies zweckmäßig ist, auch Signale einer Heck- und/oder Frontzapfwelle oder anderer Fahrzeugaggregate empfangen und auswerten. Die Ballastierung des Fahrzeugs lässt sich beispielsweise durch die Bedienungsperson anhand eines Schalters vorgeben. Sie wird ebenfalls durch die Steuereinheit erfasst und zur Einstellung der beiden Magnetventile 60, 62 ausgewertet. Die genannten und weitere Signale können der Steuereinheit 82 beispielsweise über einen CAN-BUS zur Verfügung gestellt werden.

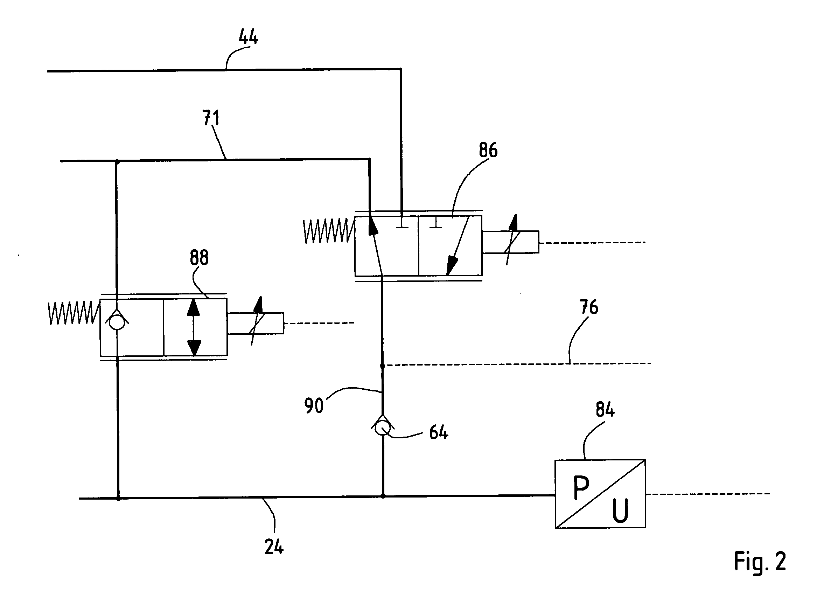

Fig. 2 zeigt eine bezüglich Fig. 1 alternative Ausführungsvariante einer der Einstellung des Ringraumdruckes dienenden erfindungsgemäßen Federungseinrichtung. Anstelle der in Fig. 1 gezeigten Schaltventile 60, und 62 werden gemäß Fig. 2 elektrisch schaltbare Proportionalventile 86, 88 verwendet.

Das erste Proportionalventil 86 ist ein 3/2-Wegeventil und ermöglicht eine wahlweise Verbindung der ringraumseitigen Hydraulikleitung 24 mit dem Tank (über die Tankleitung 71) oder mit der Pumpe 42 (über die Versorgungsleitung 44). Das erste Proportionalventil 86 wird ähnlich wie bei Fig. 1 durch eine in Fig. 2 nicht gezeigte Steuereinheit angesteuert. In der ringraumseitigen Zuleitung 90 des ersten Proportionalventils 86 befindet sich ein Rückschlagventil 64, welches einen Flüssigkeitsabfluss von der Ringraumseite verhindert. Eine Blende ist in diesem Zweig 90 nicht erforderlich, da sich der Flüssigkeitsdurchfluss durch das erste Proportionalventil 86 stufenlos einstellen lässt.

Zwischen dem ersten Proportionalventil 86 und dem Rückschlagventil 64 zweigt eine Load-Sensing-Leitung 76 ab, die wie in Fig. 1 gezeigt, zu einem Wechselventil 48 führt. Die in Fig. 1 gezeigte dritte Blende 78 ist in Fig. 2 nicht erforderlich, da sich der Druck in der Load-Sensing-Leitung 76 über das Proportionaldruckregelventil 86 zum Tank hin abbauen kann.

Das zweite Proportionalventil 88 dient, falls erforderlich, dem Druckabbau in der ringraumseitigen Hydraulikleitung 24, wie dies bereits anhand der Fig. 1 erläutert wurde. Durch die Verwendung eines Proportionalventils kann bei der Ausführung gemäß Fig. 2 eine Blende, wie in Fig. 1 gezeigt, entfallen.

Im übrigen ist die Wirkungsweise einer Fahrzeugfederung mit einer Federungseinrichtung gemäß Fig. 2 ähnlich wie die in Fig. 1 dargestellte Fahrzeugfederung.

## Patentansprüche

1. Hydropneumatische Federungseinrichtung mit wenigstens einem hydraulischen Federungszylinder (10, 12), dessen Zylinderraum (14, 16) und Ringraum (18, 20) jeweils mit wenigstens einem Druckspeicher (26, 28) in Verbindung stehen und mittels Ventilanordnungen wahlweise mit einer Druckquelle (42) und einem Tank (34) verbindbar sind, **dadurch gekennzeichnet, dass** die dem Ringraum (18, 20) zugeordnete Ventilanordnung wenigstens ein erstes Magnetventil (60, 86) aufweist, welches den Ringraum (18, 20) mit der Druckquelle (42) verbindet, und ein zweites Magnetventil (62, 88) aufweist, welches den Ringraum (18, 20) mit dem Tank (34) verbindet, und dass wenigstens ein Drucksensor, insbesondere ein Ringraumdrucksensor (84) vorgesehen ist, dessen Signale zur Ansteuerung des ersten und zweiten Magnetventils (60, 86; 62, 88) herangezogen werden.

2. Federungseinrichtung nach Anspruch 1, **dadurch gekennzeichnet, dass** wenigstens eines der beiden Magnetventile (60, 62) ein sitzdichtes Magnetventil ist.

3. Federungseinrichtung nach Anspruch 1 oder 2, **dadurch gekennzeichnet, dass** das erste Magnetventil (60) in seiner geschlossenen Stellung eine Rückschlagfunktion enthält, die einen Flüssigkeitszufluss von der Druckquelle (42) verhindert und/oder dass das zweite Magnetventil (62) in seiner geschlossenen Stellung eine Rückschlagfunktion enthält, die einen Flüssigkeitsabfluss vom Ringraum (18, 20) verhindert.

4. Federungseinrichtung nach einem der vorstehenden Ansprüche, **dadurch gekennzeichnet, dass** wenigstens ein Rückschlagventil (64) vorgesehen ist, welches in Serie mit dem ersten Magnetventil (60) angeordnet ist.

5. Federungseinrichtung nach einem der vorstehenden Ansprüche, **dadurch gekennzeichnet, dass** wenigstens eine erste Blende (74) vorgesehen ist, welche in Serie mit dem ersten Magnetventil (60) angeordnet ist und/oder dass wenigstens eine zweite Blende (75) vorgesehen ist, welche in Serie mit dem zweiten Magnetventil (62) angeordnet ist.

6. Federungseinrichtung nach einem der vorstehenden Ansprüche, **dadurch gekennzeichnet, dass** das erste und/oder zweite Magnetventil ein proportional ansteuerbares Ventil (86, 88) ist.

7. Federungseinrichtung nach einem der vorstehenden Ansprüche, **dadurch gekennzeichnet, dass** das erste Magnetventil ein Wegeventil (86) ist, welches in stromloser Stellung seinen ringraumseitigen Anschluss (90) mit seinem tankseitigen Anschluss (71) verbindet (Tankstellung) und im erregten Zustand seinen druckquellenseitigen Anschluss (44) mit dem ringraumseitigen Anschluss (90) verbindet (Druckquellenstellung).

8. Federungseinrichtung nach einem der vorstehenden Ansprüche, **dadurch gekennzeichnet, dass** das erste und/oder zweite Magnetventil ein Proportionaldruckregelventil oder ein Proportionaldruckbegrenzungsventil ist.

9. Federungseinrichtung nach einem der vorstehenden Ansprüche, **dadurch gekennzeichnet, dass** ein Druckbegrenzungsventil (66) vorgesehen ist, welches den Ringraum (18, 20) mit dem Tank (34) verbindet.

10. Federungseinrichtung nach einem der vorstehenden Ansprüche, **dadurch gekennzeichnet, dass** die Druckquelle eine Load-Sensing-Pumpe (42) enthält, deren Steueranschluss (43) über eine Steuerleitung (76) mit dem ringraumseitigen Anschluss des ersten Magnetventils (60, 86) verbunden ist.

11. Federungseinrichtung nach Anspruch 10, **dadurch gekennzeichnet, dass** die Steuerleitung (76) über eine dritte Blende (78) mit dem Tank (34) verbunden ist.

12. Federungseinrichtung nach Anspruch 10 oder 11, **dadurch gekennzeichnet, dass** ein Wechselventil (48) vorgesehen ist, dessen erster Zulaufanschluss mit der Steuerleitung (76) verbunden ist, dessen zweiter Zulaufanschluss mit einer zylinderraumseitigen Load-Sensing-Leitung (46) verbunden ist und dessen Ablaufanschluss mit dem Steueranschluss (43) der Load-Sensing-Pumpe (42) verbunden ist.

## Claims

1. Hydropneumatic suspension means having at least one hydraulic suspension cylinder (10, 12), the cylinder chamber (14, 16) and annular chamber (18, 20) of which is connected in each case to at least one pressure accumulator (26, 28) and may be connected by means of valve arrangements optionally to a pressure source (42) and a tank (34), **characterized in that** the valve arrangement associated with the annular chamber (18, 20) comprises at least a first solenoid valve (60, 86), which connects the annular chamber (18, 20) to the pressure source (42), and a second solenoid valve (62, 88), which connects the annular chamber (18, 20) to the tank (34), and **in that** at least one pressure sensor, in particular an annular chamber pressure sensor (84), is provided, the signals from which are used to actuate the first and second solenoid valves (60, 86; 62, 88).

2. Suspension means according to Claim 1, **characterized in that** at least one of the two solenoid valves (60, 62) is a tightly seated solenoid valve.

3. Suspension means according to Claim 1 or 2, **characterized in that**, in its closed position, the first solenoid valve (60) has a non-return function which prevents liquid inflow from the pressure source (42) and/or **in that**, in its closed position, the second solenoid valve (62) has a non-return function which prevents liquid outflow from the annular chamber (18, 20).

4. Suspension means according to one of the preceding claims, **characterized in that** at least one non-return valve (64) is provided, which is arranged in series with the first solenoid valve (60).

5. Suspension means according to one of the preceding claims, **characterized in that** at least a first restrictor (74) is provided, which is arranged in series with the first solenoid valve (60), and/or **in that** at least a second restrictor (75) is provided, which is arranged in series with the second solenoid valve (62).

6. Suspension means according to one of the preceding claims, **characterized in that** the first and/or second solenoid valve is a proportionally actuatable valve (86, 88).

7. Suspension means according to one of the preceding claims, **characterized in that** the first solenoid valve is a directional control valve (86) which, in the de-energized position, connects its port (90) on the annular chamber side to its port (71) on the tank side (tank position) and, in the energized state, connects it port (44) on the pressure source side to the port (90) on the annular chamber side (pressure source position).

8. Suspension means according to one of the preceding claims, **characterized in that** the first and/or second solenoid valve is a proportional pressure regulating valve or a proportional pressure limiting valve.

9. Suspension means according to one of the preceding claims, **characterized in that** a pressure limiting valve (66) is provided, which connects the annular chamber (18, 20) to the tank (34).

10. Suspension means according to one of the preceding claims, **characterized in that** the pressure source includes a load-sensing pump (42), whose control port (43) is connected to the annular chamber-side port of the first solenoid valve (60, 86) via a control line (76).

11. Suspension means according to Claim 10, **characterized in that** the control line (76) is connected to the tank (34) via a third restrictor (78).

12. Suspension means according to Claim 10 or 11, **characterized in that** a shuttle valve (48) is provided, the first inlet port of which is connected to the control line (76), the second inlet port of which is connected to a cylinder chamber-side load-sensing line (46) and the outlet port of which is connected to the control port (43) of the load-sensing pump (42).

## Revendications

1. Suspension hydropneumatique comportant au moins un cylindre de suspension (10, 12) hydraulique, dont la chambre cylindrique (14, 16) et la chambre annulaire (18, 20) communiquent chacune avec au moins un accumulateur de pression (26, 28) et peuvent être reliées au moyen de systèmes de vannes au choix à une source de pression (42) et à un réservoir (34), **caractérisée en ce que** le système de vannes associé à la chambre annulaire (18, 20) comporte au moins une vanne magnétique (60, 86), par laquelle la chambre annulaire (18, 20) est reliée à la source de pression (42), et une deuxième vanne magnétique (62, 88) par laquelle la chambre annulaire (18, 20) est reliée au réservoir (34), et **en ce qu'**il est prévu au moins un capteur de pression, en particulier un capteur (84) de la pression dans la chambre annulaire, dont les signaux sont pris en compte pour l'activation de la première et de la deuxième vannes magnétiques (60, 86 ; 62, 88).

2. Suspension selon la revendication 1, **caractérisée en ce qu'**au moins l'une des deux vannes magnétiques (60, 62) est une vanne magnétique à siège étanche.

3. Suspension selon la revendication 1 ou 2, **caractérisée en ce que** la première vanne magnétique (60), dans sa position de fermeture, remplit une fonction de retenue, qui empêche une admission de liquide venant de la source de pression (42) et/ou **en ce que** la deuxième vanne magnétique (62) dans sa position de fermeture, remplit une fonction de retenue, qui empêche une évacuation de liquide hors de la chambre annulaire (18, 20).

4. Suspension selon l'une quelconque des revendications précédentes, **caractérisée en ce qu'**il est prévu au moins un clapet de non-retour (64) qui est monté en série avec la première vanne magnétique (60).

5. Suspension selon l'une quelconque des revendications précédentes, **caractérisée en ce qu'**il est prévu au moins un premier obturateur (74) qui est monté en série avec la première vanne magnétique (60) et/ou **en ce qu'**il est prévu au moins un deuxième obturateur (75) qui est monté en série avec la deuxième vanne magnétique (62).

6. Suspension selon l'une quelconque des revendications précédentes, **caractérisée en ce que** la première et/ou la deuxième vanne magnétique est une vanne à commande proportionnelle (86, 88).

7. Suspension selon l'une quelconque des revendications précédentes, **caractérisée en ce que** la première vanne magnétique est une vanne à une voie (86) qui, dans la position non parcourue par un courant, relie son raccord (90) du côté chambre annulaire avec son raccord (71) du côté réservoir (position de réservoir) et à l'état excité relie son raccord (44) du côté source de pression avec le raccord (90) du côté chambre annulaire (position de source de pression).

8. Suspension selon l'une quelconque des revendications précédentes, **caractérisée en ce que** la première et/ou la deuxième vanne magnétique est une vanne de régulation de pression proportionnelle ou une vanne de limitation de pression proportionnelle.

9. Suspension selon l'une quelconque des revendications précédentes, **caractérisée en ce qu'**il est prévu une vanne de limitation de pression (66), par laquelle la chambre annulaire (18, 20) est reliée au réservoir (34).

10. Suspension selon l'une quelconque des revendications précédentes, **caractérisée en ce que** la source de pression comporte une pompe à détection de charge (42), dont le raccord de commande (43) est relié via une ligne de commande (76) avec le raccord du côté chambre annulaire de la première vanne magnétique (60, 86).

11. Suspension selon la revendication 10, **caractérisée en ce que** la ligne de commande (76) est reliée au réservoir (34) via un troisième obturateur (78).

12. Suspension selon la revendication 10 ou 11, **caractérisée en ce qu'**il est prévu un sélecteur de circuit (48), dont le premier raccord d'admission est relié à la ligne de commande (76), dont le deuxième raccord d'admission est relié à une conduite à détection de charge (46) du côté chambre cylindrique, et dont le raccord d'évacuation est relié au raccord de commande (43) de la pompe à détection de charge (42).
